# EUROPÄISCHE PATENTSCHRIFT

(11) **EP 1 360 078 B1**
(45) Veröffentlichungstag und Bekanntmachung des Hinweises auf die Patenterteilung: **11.04.2007**
(21) Anmeldenummer: 02719809.2
(22) Anmeldetag: 13.02.2002
(51) Int. Cl.: B60G 17/005

(54) **FEDERUNGSSYSTEM, INSBESONDERE FÜR EINE ARBEITSMASCHINE**
SUSPENSION SYSTEM, IN PARTICULAR FOR A WORKING MACHINE
SYSTEME DE SUSPENSION, NOTAMMENT POUR MACHINE-OUTIL

(30) Priorität: 14.02.2001 DE 10106706
(43) Veröffentlichungstag der Anmeldung: 12.11.2003
(73) Patentinhaber: HYDAC TECHNOLOGY GMBH, 66280 Sulzbach/Saar (DE)
(72) Erfinder: HUTH, Heinz-Peter, 66802 Überhern (DE)
(74) Vertreter: Bartels, Martin Erich Arthur
(86) Internationale Anmeldenummer: PCT/EP2002/001468
(87) Internationale Veröffentlichungsnummer: WO 2002/064387

(56) Entgegenhaltungen:
- EP-A- 0 517 546
- EP-A- 0 867 315
- EP-A- 0 913 280
- DE-A- 4 120 758
- DE-A- 4 235 264
- DE-A- 4 308 460
- DE-C- 4 242 448
- US-A- 5 813 697

## Beschreibung

Die Erfindung betrifft ein Federungssystem, insbesondere für eine Arbeitsmaschine, wie einen Traktor od. dgl., mit der Merkmalsausgestaltung des Oberbegriffes des Patentanspruches 1.

Bei bestimmten Federungssystemen, beispielsweise für Arbeitsmaschinen, wie Traktoren od. dgl., kann es sinnvoll sein, diese beispielsweise bei Unterschreiten einer vorgebbaren Geschwindigkeit der Arbeitsmaschine zu sperren. Dadurch wird erreicht, daß bei niedrigen Geschwindigkeiten des Fahrzeuges oder bei dessen Stillstand die hydropneumatische Federung gesperrt ist. Demzufolge können dann Arbeitsschritte wie Heben, Be- und Entladen von Lasten oder das Ineinsatzbringen von Ernte- oder sonstigen Arbeitsgerätschaften ohne störende Fahrzeugeinfederung erfolgen.

Da beim Weiter- oder Losfahren nach solchen Arbeiten der Lastzustand dann nicht bekannt ist, bewegt sich bei den bekannten Federungssystemen das Fahrzeug oder die Arbeitsmaschine beim Öffnen der Sperrung unkontrolliert, was dem Grunde nach nicht akzeptabel ist.

Durch die DE-A-2 023 283 ist ein gattungsgemäßes Federungssystem bekannt für eine Arbeitsmaschine, wie beispielsweise ein Baustellenfahrzeug, mit zwei mit unterschiedlichen Lastdrücken beaufschlagbaren Federungszylindern, deren Kolbenseiten jeweils an einen Federungsspeicher über eine Absperreinrichtung anschließbar sind, die die Federung sperrt und mit einer Ausgleichseinrichtung für die Ansteuerung der Kolbenseite des jeweiligen Federungszylinders. Das gattungsgemäße Federungssystem ist eingesetzt für eine Aufhängevorrichtung zwischen Gestell und Radachse eines Fahrzeuges, bestehend aus zwei einzelnen Radträgern, die mit dem Gestell über ein zwischen dem Gestell und jeweils einem Radträger angeordneten Stützelement gelenkig verbunden sind. Mit dem bekannten Federungssystem ist ein automatischer Niveauausgleich für das Fahrzeug erreicht, wobei diese Einstellung auf ein mittleres Niveau bezogen sein kann, wobei man unter Niveau eines Fahrzeuges dessen Lage zum Boden versteht und der Abstand zwischen einer Stelle des Fahrzeuggestells und dem Boden gibt annäherungsweise das Niveau des Fahrzeuges an. Obwohl neben der Niveaueinstellung mit der bekannten Lösung auch eine besonders weich einsetzende Federung realisiert ist, kommt es unter Last zu störenden Fahrzeugeinfederungen, wie eingangs beschrieben.

Durch die DE-C-41 27 917 ist ein Federungssystem bekannt umfassend einen Federungsspeicher mit Kolben- und Stangenseite, wobei über eine Ventilabsperreinrichtung neben der Kolbenseite zusätzlich auch die Stangenseite an einen Federungsspeicher anschließbar ist. Hierdurch ergibt sich in der Art einer Federung eine jeweils gegensinnig wirkende Abstützkraft über den jeweiligen Federungsspeicher für die Kolben- als auch für die Stangenseite des Federungszylinders; allein auch mit diesem Federungssystem lassen sich die beschriebenen Nachteile im Stand der Technik nicht vermeiden.

Durch die DE-C-42 42 448 ist ein gattungsgemäßes Federungssystem bekannt mit einem mit unterschiedlichen Lastdrücken beaufschlagbaren Federungszylinder, dessen Kolben- und Stangenseite jeweils an einen Federungsspeicher über eine Absperreinrichtung anschließbar sind, die die Federung sperrt, und mit einer Ausgleichseinrichtung, die für die Ansteuerung der Kolbenseite des Federungszylinders innerhalb der Versorgungseinrichtung ein Schaltventil aufweist, sowie mit einer Druckversorgung für den Erhalt des benötigten Systemdruckes im Federungssystem, wobei die Ausgleichseinrichtung für die Ansteuerung der Stangenseite des Federungszylinders innerhalb der Versorgungseinrichtung ein weiteres Schaltventil aufweist, wobei in einem Nebenzweig zu einer Leitung mit Teilen der Absperreinrichtung und dem zuordenbaren Federungsspeicher für die Kolbenseite des Federungszylinders eine Lastüberwachungseinrichtung geschaltet ist, die die Druckversorgung für den Erhalt des benötigten Systemdruckes ansteuert, wobei die Absperreinrichtung für die Kolbenseite des Federungszylinders ein Schaltventil aufweist, das in seiner unbetätigten Grundstellung den fluidführenden Weg zu dem zugeordneten Federungsspeicher sperrt und in der anderen Richtung freigibt, wobei die Federungsspeicher gegenüber der Versorgungseinrichtung über je ein in die jeweils zuordenbare Leitung geschaltetes Rückschlagventil trennbar sind, das federbelastet in seiner Schließstellung gehalten ist und in Richtung des jeweiligen Federungsspeichers seine geöffnete Stellung einnimmt, und wobei die Lastüberwachungseinrichtung über eine Aufsteuerleitung mit entsperrbarem Ventil in den Nebenzweig mündet.

Mit dieser bekannten hydro-pneumatischen Federungseinrichtung ist ein energieeinsparender Betrieb möglich und durch den Einsatz einer Load-Sensing-Pumpe wird der Ringraum des jeweiligen Federungszylinders über ein 3-Wege-Druckregelventil mit Druck versorgt, wobei eine Niveauregeleinrichtung mit einer Ventileinrichtung derart vorgesehen ist, daß nur bei statischen Laständerungen kurzzeitig auf- oder abgeregelt wird und in der sonst eingenommenen Ruhestellung sind alle Steuerleitungen und Zuleitungen drucklos gemacht, wobei die Kolben- und Ringräume über entsperrbare Rückschlagventile hermetisch abgesperrt werden. Die bekannte Lösung geht mithin bei der Realisierung von der Überlegung aus, daß sich das Lastverhältnis auch dann vergrößern läßt, wenn man den Ringraum nicht permanent regelt, sondern nur von Zeit zu Zeit mit einem konstanten Druck beaufschlagt und ansonsten hermetisch dicht absperrt. Auch bei dieser bekannten Lösung kann es aber beim Öffnen der Sperrung ungewollt zu Fahrzeugeinfederungen unter der unbekannten Last kommen.

Auch baut die bekannte Lösung aufgrund der Vielzahl an Baukomponenten kompliziert auf.

Ausgehend von diesem Stand der Technik liegt daher der Erfindung die Aufgabe zugrunde, ein Federungssystem zu schaffen, das die vorstehend beschriebenen Nachteile vermeiden hilft. Eine dahingehende Aufgabe löst ein Federungssystem mit den Merkmalen des Patentanspruches 1 in seiner Gesamtheit.

Dadurch, daß gemäß dem kennzeichnenden Teil des Patentanspruches 1 die Absperreinrichtung auch für die Stangenseite des Federungszylinders ein zur Kolbenseite gleichwirkendes weiteres Schaltventil aufweist, daß jeder Federungsspeicher zwischen dem zuordenbaren Schaltventil und dem jeweiligen Rückschlagventil in die der Kolben- und Stangenseite des Federungszylinders zugehörige Leitung geschaltet ist, und daß der Nebenzweig vom entsperrbaren Ventil kommend in die Leitung zwischen dem einen Schaltventil und der Kolbenseite des Federungszylinders mündet, ist es jedenfalls mit dieser speziellen hydraulischen Schaltung mit Ausgleichseinrichtung möglich, vor erneuter Inbetriebnahme der Federung einen Druckausgleich des Systems auf den jeweils herrschenden Lastdruck vorzunehmen. Unabhängig von der Laständerung wird also bei dem erfindungsgemäßen Federungssystem ein Druckausgleich zwischen dem Federungszylinder und dem zugeordneten Federungsspeicher durchgeführt und somit eine unkontrollierte Bewegung der Achse beim Einschalten des Federungssystems vermieden.

Bei einer bevorzugten Ausführungsform des erfindungsgemäßen Federungssystems überwacht eine Sensoreinrichtung die jeweilige Arbeitsstellung des Betätigungskolbens im Federungszylinder und eine bereits kleine Bewegung im Bereich des Federungszylinders löst den angesprochenen Druckausgleich unabhängig von der Laständerung aus.

Weitere vorteilhafte Ausgestaltungen des erfindungsgemäßen Federungssystems sind Gegenstand der Unteransprüche.

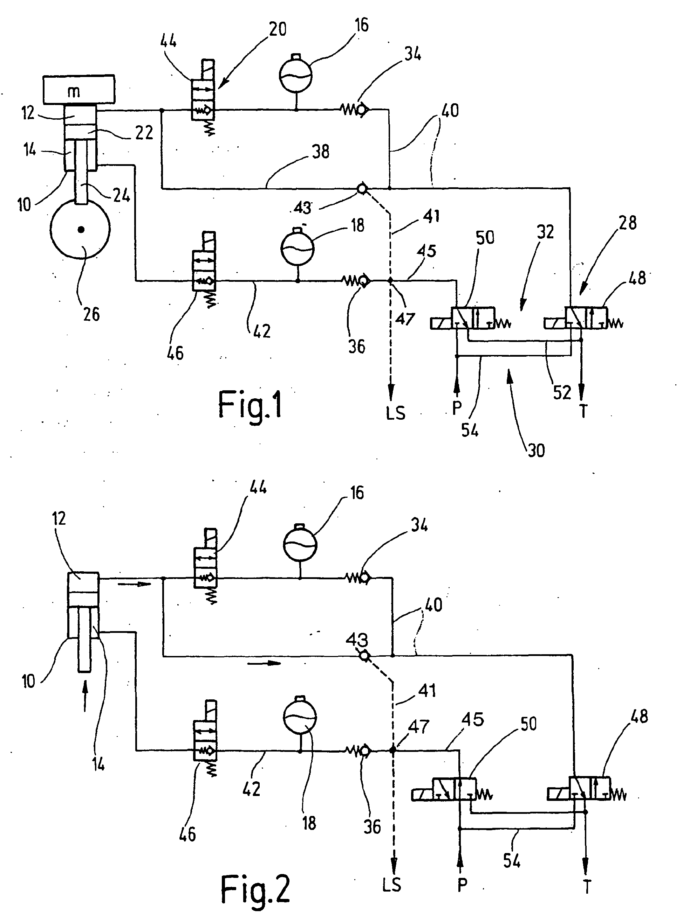

Im folgenden wird das erfindungsgemäße Federungssystem anhand eines Ausführungsbeispiels nach der Zeichnung näher erläutert. Dabei zeigen in prinzipieller Darstellung die
- Fig.1 bis 4: einen Schaltungsplan für das erfindungsgemäße Federungssystem in verschiedenen Betriebszuständen.

Das Federungssystem nach der Fig.1 ist in seinem gesperrten Zustand dargestellt, d.h. die eigentliche Federungseigenschaft des Federungssystems ist abgeschaltet.

Das angesprochene Federungssystem weist einen mit unterschiedlichen Lastdrücken m beaufschlagbaren Federungszylinder 10 auf, dessen Kolbenseite 12 und dessen Stangenseite 14 jeweils an einen Federungsspeicher 16 bzw. 18 über eine als Ganzes mit 20 bezeichnete Absperreinrichtung anschließbar sind, wobei die Absperreinrichtung 20 in der gezeigten Schaltstellung die angesprochene Federung sperrt. Der Federungszylinder 10 ist über sein Gehäuse mit einem nicht näher dargestellten Fahrzeugchassis verbunden und am freien Ende ist die mit dem Kolben 22 verbundene Kolbenstange 24 an einem Fahrzeugrad 26 angelenkt, wobei mehrere Fahrzeugräder nebst zugeordneten Federungszylindern (nicht dargestellt) die Verfahrbarkeit der Arbeitsmaschine, wie einen Traktor od. dgl., sicherstellen. Des weiteren weist das Federungssystem eine als Ganzes mit 28 bezeichnete Ausgleichseinrichtung auf, die den Zylinder unter Zuhilfenahme der Versorgungseinrichtung ein-oder ausfährt.

Wie die Fig.1 des weiteren zeigt, sind die beiden Federungsspeicher 16, 18, die in der Art üblicher Hydrospeicher, wie Membranspeicher od. dgl., ausgebildet sind, und die Absperreinrichtung 20 an eine als Ganzes mit 30 bezeichnete Versorgungseinrichtung angeschlossen, die als Teil der Ausgleichseinrichtung 28 anzusehen ist und die über eine als Ganzes mit 32 bezeichnete Schalteinrichtung wahlweise eine Verbindung zu einer Druckversorgungsquelle P und/oder zu einem Tankanschluß T sicherstellt. Ferner sind die beiden Federungsspeicher 16,18 gegenüber der Versorgungseinrichtung 30 über je ein Rückschlagventil 34,36 trennbar, die jeweils federbelastet in einer Schließstellung gehalten sind und in Richtung des jeweiligen Federungsspeichers 16 bzw. 18 in ihre geöffnete Stellung gelangen.

In einen Nebenzweig 38 zu der Leitung 40 mit der Absperreinrichtung 20 des Federungszylinders 10 ist ein entsperrbares Rückschlagventil.43 geschaltet. Die Aufsteuerleitung 41 des entsperrbaren Rückschlagventils 43 ist mit der Steuerleitung LS der Versorgungseinrichtung 30 und der Leitung 45 zwischen dem Rückschlagventil 36 und dem 3/2-Wege-Schaltventil 50 verbunden. Die dahingehende fluidführende Verbindung erfolgt an der Verbindungsstelle 47. Über diese dahingehende Verbindung ist eine Rückmeldung an das load sensing system möglich, damit die das System versorgende Hydropumpe P auf Systemdruck gehen kann. Das entsperrbare Rückschlagventil 43 selbst ist zwischen die Leitungen 38 und 40 geschaltet. Neben der kolbenseitigen Leitung 40 ist auch auf der Stangenseite 14 des Federungszylinders 10 eine weitere Leitung 42 angeschlossen mit Federungsspeicher 18 und zugeordnetem Rückschlagventil 36.

Die genannte Absperreinrichtung 20 weist sowohl für die Kolbenseite 12 als auch für die Stangenseite 14 des Federungszylinders 10 jeweils ein 2/2-Wege-Schaltventil 44,46 auf, das in seiner unbetätigten Grundstellung, wie in der Fig.1 dargestellt, den fluidführenden Weg von dem Federungszylinder 10 in Richtung der Federungsspeicher 16,18 sperrt und in der anderen Richtung federbelastet freigibt. In der in der Fig.1 gezeigten Sperrstellung ist mithin der Federungszylinder 10 mit seiner Kolbenseite 12 und seiner Stangenseite 14 von den zugeordneten Federungsspeichern 16 bzw. 18 getrennt und damit das Federungssystem gesperrt, so daß ein Ein- oder Ausfedern des nicht näher dargestellten Fahrzeuges nicht möglich ist und eine Laständerung m nicht zu einem ungewollten Ein- oder Ausfedern des Gesamtsystems führen kann.

Die genannte Ausgleichseinrichtung 28 weist sowohl für die Kolbenseite 12 als auch für die Stangenseite 14 des Federungszylinders 10 innerhalb der Versorgungseinrichtung 30 jeweils ein 3/2-Wege-Schaltventil 48 bzw. 50 auf, die in ihrer unbetätigten Grundstellung miteinander über eine Verbindungsleitung 52 mit dem Tankanschluß T verbunden sind und auf ihrer Eingangsseite über eine weitere Verbindungsleitung 54 zusätzlich miteinander fluidführend in Verbindung stehen. Ferner verfügt der Federungszylinder 10 über eine nicht näher dargestellte Sensoreinrichtung, mit der es möglich ist, die Position der Kolbenstange 24 und/oder des Kolbens 22 zu überwachen, wobei die nicht näher dargestellte Sensoreinrichtung ihre Signale an eine nicht näher dargestellte Auswerteelektronik weitergibt, die wiederum die Schaltventile 44,46,48 und 50 für einen Schaltvorgang ansteuert. Wie die dahingehende Ansteuerung für einen Druckausgleich vor Inbetriebnahme der Federung vonstatten geht, wird im folgenden nunmehr näher erläutert werden.

Zunächst wird noch einmal Bezug genommen auf den Systemzustand nach der Fig.1. Bei der gezeigten Situation ist die Federung gesperrt und der Federungszylinder 10 befindet sich auf Niveauposition. Ein Ein- oder Ausfedern des Kolbens 22 mit Kolbenstange 24 ist somit nicht möglich, da ein Fluidaustritt auf der Kolbenseite 10 bzw. der Stangenseite 14 über die Schaltventile 44,46 in ihrer geschlossenen Position unterbunden ist. In der gezeigten Sperrstellung wird die Sperrung über die Schaltventile 44,46 dergestalt erreicht, daß in ihnen ein integriertes Rückschlagventil in Richtung des Federungszylinders 10 öffnen kann, in der entgegengesetzten Richtung, also in Richtung der Federungsspeicher 16,18, aber geschlossen gehalten wird. Ein erhöhter Druck auf seiten der Federungsspeicher 16,18 würde also zu einem Öffnen der Schaltventile 44,46 auch in ihrer Sperrstellung in Richtung zu dem Federungszylinder 10 führen. Wird bei der gezeigten Schaltstellung nach der Fig.1 die Last oder der Lastdruck m nicht verändert, so entspricht der Druck auf der Kolbenseite 12 dem Fluiddruck des Speichers 16 und der Fluiddruck auf der Stangenseite 14 entspricht dem Fluiddruck des Federungsspeichers 18, wobei der stangenseitige Druck dem Systemdruck entspricht. Um nun eine unkontrollierte Bewegung des Fahrzeugrades 26 und mithin der bewegbaren Teile des Federungszylinders 10 beim Einschalten der Federung zu verhindern, ist vorher ein Druckausgleich zwischen dem Federungszylinder 10 und den Federungsspeichern 16,18 vorzunehmen.

Um zu diesem Druckausgleich zu gelangen, wird in einem ersten Schritt gemäß der Darstellung nach der Fig.2 das 3/2-Wege-Ventil 50 geschaltet und die weitere Leitung 42 an die Hydraulikpumpe P angeschlossen. Da das Schaltventil 48 in seiner unbetätigten gezeigten Stellung verbleibt, ist der Pumpendruck in der weiteren Verbindungsleitung 54 in Richtung der ersten Leitung 40 über das Schaltventil 48 gesperrt. Entspricht der Druck auf der Kolbenseite 1.2 dem erforderlichen Lastdruck, so beginnt die Bewegung am Federungszylinder 10 sofort und der Kolben 22 nebst Kolbenstange 24 fährt in Richtung auf die Kolbenseite 12 des Federungszylinders 10 ein. Der Druck im Federungsspeicher 16 könnte noch kleiner sein als der Druck auf der Kolbenseite 12 des Federungszylinders 10. Insbesondere wird die überschüssige Fluidmenge bei der dahingehenden Bewegung gemäß der Pfeildarstellung von der Kolbenseite 12 in Richtung des Nebenzweiges ausgeschoben.

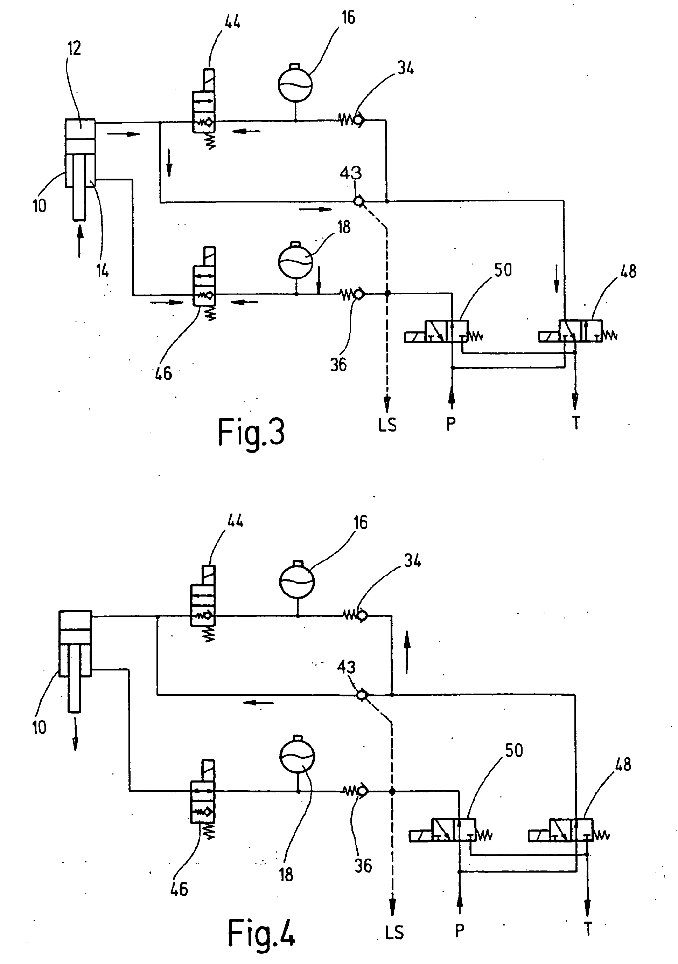

Liegt der Druck auf der Kolbenseite 12 über dem erforderlichen Lastdruck m, so wird zunächst Fluid, insbesondere Hydrauliköl, aus dem Federungsspeicher 16 und über das 2/2-Wege-Schaltventil 44 gemäß der Pfeildarstellung nach der Fig.3 zum Tank T hin abgelassen, bis der Lastdruck m erreicht ist. Ist der Lastdruck m erreicht, beginnt die Bewegung am Federungszylinder 10 und der Zylinder fährt in Pfeilrichtung gesehen ein. Beim Einfahren des Federungszylinders wird auf der Ring- oder Stangenseite 14 des Federungszylinders 10 Hydrauliköl aus dem zugeordneten Speicher 18 aufgenommen und so ein Druckausgleich zwischen Zylinderdruck auf der Stangenseite 14 und Speicherdruck für den Federungsspeicher 18 auf Systemdruck durchgeführt. Wird über die Steuerung (Sensoreinrichtung, Auswerteelektronik) eine Bewegung am System-Federungszylinder 10 erkannt, ist der erste Schritt zum Druckausgleich abgeschlossen. Der Druck auf der Stangenseite 14 des Federungszylinders 10 entspricht dann dem Speicherdruck des zugeordneten Federungsspeichers 18 und beide Drücke entsprechen dem Systemdruck. Anschließend wird das Ventil 46 geschaltet und nimmt dann eine schaltstellung gemäß der Darstellung nach der Fig. 4 ein.

Der weitere zweite Schritt zum Druckausgleich besteht nun darin, daß sowohl das 3/2-Wege-Schaltventil 50 als auch das 3/2-Wege-Schaltventil 48 in seine, jeweils die Leitung 40 bzw. 42 versorgende durchlassende Stellung geschaltet wird. Bei dem dahingehenden, in der Fig.4 gezeigten Schaltzustand fährt nun in Pfeilrichtung der Kolben 22 mit der Kolbenstange 24 aus dem Federungszylinder 10 aus. Entspricht der Speicherdruck des Federungsspeichers 16 bereits dem erforderlichen Lastdruck m, so beginnt die Bewegung am Federungszylinder 10 sofort und der Federungszylinder 10 fährt aus. Liegt der Speicherdruck am Federungsspeicher 16 jedoch zunächst unter dem erforderlichen Lastdruck m, so wird in einem ersten Schritt der Federungsspeicher 16 über das zugeordnete Rückschlagventil 34 in der Leitung 40 auf Lastdruck gefüllt. Ist der Lastdruck erreicht, beginnt die Bewegung am Federungszylinder 10 und der Kolben 22 mit Kolbenstange 24 fährt aus. Da das System von Kolben 22 und Kolbenstange 24 sich an der ungefederten Masse abstützt, welche üblicherweise Bodenberührung haben dürfte, kommt das Ausfahren des Systems von Kolben 12 und Kolbenstange 24 dem Anheben der gefederten Masse gleich. Bei der genannten Ausfahrbewegung des Federungszylinders 10 ist der Druck auf der Kolbenseite 12 gleich dem Druck im Federungsspeicher 16 und dies entspricht wiederum dem Lastdruck m. Die bereits genannte Steuerung, im wesentlichen gebildet aus der nicht näher dargestellten Sensoreinrichtung und der Auswerteelektronik, erkennt die Bewegung am Federungszylinder 10 und der Druckausgleich gilt dann als abgeschlossen. Die Ventile 48 und 50 werden dann wiederum in ihre in der Fig.1 gezeigte Sperrstellung geschaltet und nach Schalten des in Blickrichtung auf die Fig.4 gesehen oberen 2/2-Wege-Schaltventils 44 ist die Federung offen, d.h. sowohl die Kolbenseite 12 als auch die Stangenseite 14 sind mit den jeweils ihnen zugeordneten Federungsspeichern 16 bzw. 18 für ein Federungsverhalten fluidführend verbunden.

Durch die aufgezeigte Schaltung und den beschriebenen Schaltungsablauf mit kleinen Bewegungen am Federungszylinder in der einen oder entgegengesetzten Richtung wird unabhängig von einer möglichen Laständerung m ein Druckausgleich zwischen Federungszylinder 10 und den zugeordneten Speichern 16, 18 durchgeführt, so daß eine unkontrollierte Bewegung beim Einschalten der Federung vermieden ist.

Bei einer nicht näher dargestellten Ausführungsform der Erfindung können die gefederten Massen mit den ungefederten Massen auch getauscht werden, wobei die Schaltung des Federungssystems im wesentlichen erhalten bleibt, d.h. sowohl am Kolben als auch am Stangenraum des Federungszylinders 10 bleiben die beschriebenen Hydrautikkomponenten, wie dargestellt, angeschlossen, wobei durch den dahingehenden Tausch die genannten Vorteile beibehalten werden. Bei einer weiteren nicht näher dargestellten Ausführungsform ist es des weiteren möglich, die jeweilige Druckdifferenz vor und hinter dem Schaltventil 44 mit üblichen Meßeinrichtungen zu erfassen. Für den Fall, daß kein Differenzdruck (Toleranz zulässig - minimaler Differenzdruck) vorhanden ist, kann man sich den vorstehend beschriebenen zweiten Schritt für den Druckausgleich sparen und demzufolge kann noch schneller die Federung freigegeben werden.

In den Figuren sind nur die wichtigsten Komponenten des beanspruchten Federungssystems dargestellt und entsprechende Drosseln sowie Rückschlagventile für die Dämpfung des Systems und das eigentliche Wegmeßsystem für die Bewegungsmessung des Systemzustandes am Federungszylinder 10 sind der besseren Darstellung wegen nicht im Schaltplan mit aufgenommen. Am freien Ende der Lastüberwachungseinrichtung LS ist eine übliche Regelpumpe, beispielsweise in Form einer Schwenkpumpe, angeordnet, die die Fluidmenge derart regelt, daß der Betrag des über die Lastüberwachungseinrichtung LS gemeldeten Druckes eingehalten ist. In Abhängigkeit der Druck- und Lastsituation entsteht derart ein in sich geschlossener Regelkreis.

## Patentansprüche

1. Federungssystem, insbesondere für eine Arbeitsmaschine, wie einen Traktor od. dgl., mit einem mit unterschiedlichen Lastdrücken (m) beaufschlagbaren Federungszylinder (10), dessen Kolben(12)- und Stangenseite (14) jeweils an einen Federungsspeicher (16,18) über eine Absperreinrichtung (20) anschließbar sind, die die Federung sperrt, und mit einer Ausgleichseinrichtung (28), die für die Ansteuerung der Kolbenseite (12) des Federungszylinders (10) innerhalb der Versorgungseinrichtung (30) ein Schaltventil (48) aufweist, sowie mit einer Druckversorgung (P) für den Erhalt des benötigten Systemdruckes im Federungssystem, wobei die Ausgleichseinrichtung (28) für die Ansteuerung der Stangenseite (14) des Federungszylinders (10) innerhalb der Versorgungseinrichtung (30) ein weiteres Schaltventil (50) aufweist, wobei in einem Nebenzweig (38) zu einer Leitung (40) mit Teilen der Absperreinrichtung (20) und dem zuordenbaren Federungsspeicher (16) für die Kolbenseite (12) des Federungszylinders (10) eine Lastüberwachungseinrichtung (LS) geschaltet ist, die die Druckversorgung (P) für den Erhalt des benötigten Systemdruckes ansteuert, wobei die Absperreinrichtung (20) für die Kolbenseite (12) des Federungszylinders (10) ein Schaltventil (44) aufweist, das in seiner unbetätigten Grundstellung den fluidführenden Weg zu dem zugeordneten Federungsspeicher (18) sperrt und in der anderen Richtung freigibt, wobei die Federungsspeicher (16,18) gegenüber der Versorgungseinrichtung (30) über je ein in die jeweils zuordenbare Leitung (40,42) geschaltetes Rückschlagventil (34,36) trennbar sind, das federbelastet in seiner Schließstellung gehalten ist und in Richtung des jeweiligen Federungsspeichers (16,18) seine geöffnete Stellung einnimmt, und wobei die Lastüberwachungseinrichtung (LS) über eine Aufsteuerleitung (41) mit entsperrbarem Ventil (43) in den Nebenzweig (38) mündet, **dadurch gekennzeichnet, daß** die Absperreinrichtung (20) auch für die Stangenseite (14) des Federungszylinders (18) ein zur Kolbenseite (12) gleichwirkendes weiteres Schaltventil (36) aufweist, daß jeder Federungsspeicher (16,18) zwischen dem zuordenbaren Schaltventil (44,46) und dem jeweiligen Rückschlagventil (34,36) in die der Kolben(12)- und Stangenseite14) des Federungszylinders (10 zugehörige Leitung (40,42) geschaltet ist, und daß der Nebenzweig (38) vom entsperrbaren Ventil (43) kommend in die Leitung zwischen dem einen Schaltventil (44) und der Kolbenseite (12) des Federungszylinders (10) mündet.

2. Federungssystem nach Anspruch 1, **dadurch gekennzeichnet, daß** die Federungsspeicher (16,18) und die Absperreinrichtung (20) an die Versorgungseinrichtung (30) als Teil der Ausgleichseinrichtung (28) angeschlossen sind, die über eine Schalteinrichtung (32) wahlweise eine Verbindung zu einer Druckversorgungsquelle (P) und/oder zu einem Tankanschluß (T) sicherstellt.

3. Federungssystem nach Anspruch 1 oder 2, **dadurch gekennzeichnet, daß** das jeweilige Schaltventil (44,46) ein 2/2-Wege-Schaltventil ist.

4. Federungssystem nach einem der Ansprüche 1 bis 3, **dadurch gekennzeichnet, daß** die Schaltventile (48,50) als 3/2-Wege-Schaltventile ausgebildet sind, die in ihrer unbetätigten Grundstellung mit dem Tankanschluß (T) verbunden und auf ihrer Eingangsseite fluidführend miteinander in Verbindung stehen.

5. Federungssystem nach Anspruch 4, **dadurch gekennzeichnet, daß** eine Aufsteuerleitung (41) für ein entsperrbares Ventil (43), insbesondere in Form eines Rückschlagventils, an eine Leitung (45) zwischen dem Rückschlagventil (36) und dem Ventil (50) angeschlossen ist.

6. Federungssystem nach Anspruch 4 oder 5, **dadurch gekennzeichnet, daß** der Federungszylinder (10), insbesondere die Position der Kolbenstange (24), über eine Sensoreinrichtung überwacht ist, die ihre Signale an eine Auswerteelektronik weitergibt, die die Schaltventile (44,46,48,50) für einen Schaltvorgang ansteuert.

## Claims

1. Suspension system, in particular for a working machine such as a tractor or suchlike, with a suspension cylinder (10) that can be subjected to different load pressures (m), the piston (12) and rod sides (14) of which can be connected to a suspension store (16, 18) via a blocking means (20) which blocks the suspension, and with a balancing means (28) comprising a switching valve (48) for controlling the piston side (12) of the suspension cylinder (10) within the supply device (30), as well as a pressure supply (P) for maintaining the necessary system pressure within the suspension system, whereby the balancing means (28) comprises a further switching valve (50) for controlling the rod side (14) of the suspension cylinder (10) within the supply device (30), and whereby a load monitoring means (LS) is located in an adjacent branch (38) of one line (40) with parts of the blocking means (20) and the associated suspension store (16) for the piston side (12) of the suspension cylinder (10), the same controlling the pressure supply (P) for generating the necessary system pressure, whereby the blocking means (20) comprises a switching valve (44) for the piston side (12) of the suspension cylinder (10), which blocks the fluid conveying path to the associated suspension store (18) in its non-activated basic position and releases the same in the other direction, whereby the suspension store (16, 18) can be separated from the supply device (30) by means of a non-return valve (34, 36) located in the relevant associated line (40, 42), the same being held in its closed position by means of spring force, and taking up its open position in the direction of the relevant suspension store (16, 18), and whereby the load monitoring means (LS) opens into the adjacent branch (38) via a control line (41) with a relevant valve (43), **characterised in that** the blocking means (20) also comprises a further switching valve (36) functioning in an identical way to that of the piston side (12) for the rod side (14) of the suspension cylinder (18), and **in that** each suspension store (16, 18) is located between the associated switching valve (44, 46) and the relevant non-return valve (34, 36) in the line (40, 42) associated with the piston (12) and the rod sides (14) of the suspension cylinder (10), and **in that** the adjacent branch (38) opens from the unlockable valve (43) into the line between one switching valve (44) and the piston side (12) of the suspension cylinder (10).

2. Suspension system according to Claim 1, **characterised in that** the suspension store (16, 18) and the blocking means (20) are connected to the supply device (30) as a part of the balancing means (28), which ensures an optional connection to the pressure supply source (P) and/or a tank connection (T) via a switching means (32).

3. Suspension system according to Claim 1 or 2, **characterised in that** the relevant switching valve (44, 46) is a 2/2-way switching valve.

4. Suspension system according to one of the Claims 1 to 3, **characterised in that** the switching valves (48, 50) take the form of 3/2-way switching valves, which are connected to the tank connection (T) in their non-activated basic position, and are connected with each other in a fluid conveying way on their input sides.

5. Suspension system according to Claim 4, **characterised in that** a control line (41) for an unlockable valve (43), in particular in the form of a non-return valve, is connected to a line (45) between the non-return valve (36) and the valve (50).

6. Suspension system according to Claim 4 or 5, **characterised in that** the suspension cylinder (10), in particular the position of the piston rod (24), is monitored by means of a sensor device, which transmits its signal to evaluation electronics, which control the switching valves (44, 46, 48, 50) for a switching process.

## Revendications

1. Système de suspension, notamment pour une machine-outil telle qu'un tracteur ou similaire, comprenant un vérin de suspension (10) soumis à des pressions de charge (m) différentes, dont le côté piston (12) et le côté tige (14) peuvent être raccordés respectivement à un accumulateur de suspension (16, 18) par l'intermédiaire d'un dispositif de blocage (20) qui bloque la suspension, et un dispositif de compensation (28) ayant, pour piloter le côté piston (12) du vérin de suspension (10) à l'intérieur du dispositif d'alimentation (30), une vanne de commande (48), ainsi qu'une alimentation en pression (P) pour obtenir la pression de système requise dans le système de suspension, le dispositif de compensation (28) ayant dans le dispositif d'alimentation (30) une autre vanne de commande (50) pour piloter le côté tige (14) du vérin de suspension (10), un dispositif de contrôle de charge (LS) étant monté dans une branche secondaire (38) allant vers une conduite (40) avec des parties du dispositif de blocage (20) et de l'accumulateur de suspension (16) associé, pour le côté piston (12) du vérin de suspension (10), le dispositif de contrôle de charge (LS) régulant l'alimentation en pression (P) pour obtenir la pression de système requise, le dispositif de blocage (20) ayant pour le côté piston (12) du vérin de suspension (10) une vanne de commande (44) qui bloque, dans sa position de base non actionnée, le trajet menant les fluides vers l'accumulateur de suspension (18) associé, et le dégage dans l'autre sens, les accumulateurs de suspension (16, 18) pouvant être isolés vis-à-vis du dispositif d'alimentation (30) par des clapets (34, 36) anti-retour respectifs, montés dans la conduite (40, 42) pouvant être respectivement associée, les clapets anti-retour étant maintenus, en étant soumis à l'action d'un ressort, dans leur position de fermeture et prenant leur position ouverte en direction de l'accumulateur de suspension (16, 18) respectif, le dispositif de contrôle de charge (LS) débouchant dans la branche secondaire (38) par le biais d'une conduite de commande (41) ayant une vanne déblocable (43), **caractérisé en ce que** le dispositif de blocage (20) présente également pour le côté tige (14) du vérin de suspension (10) une autre vanne de commande (36) agissant de la même façon que du côté piston (12), **en ce que** chaque accumulateur de suspension (16, 18) est monté entre la vanne de commande (44, 46) pouvant être associée et le clapet anti-retour (34, 36) respectif dans la conduite (40, 42) associée au côté piston (12) et côté tige (14) du vérin de suspension (10), et **en ce que** la branche secondaire (38) venant de la vanne déblocable (43) débouche dans la conduite située entre une des vannes de commande (44) et le côté piston (12) du vérin de suspension (10).

2. Système de suspension selon la revendication 1, **caractérisé en ce que** les accumulateurs de suspension (16, 18) et le dispositif de blocage (20) sont raccordés au dispositif d'alimentation (30) en tant que partie du dispositif de compensation (28) qui garantit par le biais d'un dispositif de commutation (32), au choix, une liaison à une source d'alimentation en pression (P) et/ou à un raccordement du réservoir (T).

3. Système de suspension selon la revendication 1 ou 2, **caractérisé en ce que** la vanne de commande (44, 46) concernée est une vanne de commande 2/2.

4. Système de suspension selon l'une quelconque des revendications 1 à 3, **caractérisé en ce que** les vannes de commande (48, 50) sont conçues comme vannes de commande 3/2 qui, dans leur position de base non actionnée, sont reliées avec le raccordement du réservoir (T) et qui, menant le fluide, communiquent ensemble sur leur côté d'entrée.

5. Système de suspension selon la revendication 4, **caractérisé en ce qu'**une conduite de commande (41) pour une vanne déblocable (43), en particulier sous forme d'un clapet anti-retour, est raccordée à une conduite (45) située entre le clapet anti-retour (36) et la vanne (50).

6. Système de suspension selon la revendication 4 ou 5, **caractérisé en ce que** le vérin de suspension (10), en particulier la position de la tige de piston (24), est contrôlé par le biais d'un dispositif de détection, qui transmet ses signaux à une unité électronique d'interprétation qui pilote les vannes de commande (44, 46, 48, 50) pour un processus de commutation.
